# EUROPEAN PATENT APPLICATION

(11) **EP 2 282 526 A2**
(43) Date of publication of application: **09.02.2011**
(21) Application number: 10172041.5
(22) Date of filing: 05.08.2010
(51) Int. Cl.: H04N 5/33

(54) **Video scanner system and method**

(30) Priority: 06.08.2009 US 462645
(71) Applicant: White Box Inc., Stamford, CT 06907 (US)
(72) Inventor: Hollander, Milton Bernard, 06903 Stamford, CT (US); Baghai, Shahin, 06611 Trumbull, CT 06611 (US)
(74) Representative: Witte, Weller & Partner

(57) **Abstract**

System and method are described for visualization and for display of remote surface measurement areas by capture of both visible and invisible views of image zones of an identified surface measurement area and the mutual display of visible and infrared views of thermal image zones with temperature indication across a panoramic view of the measured area by video. Fig. 12

## Description

This invention relates to video systems for variable parameter scanning, measurement, visualization, detection and management, and particularly relates to thermometers, radiometers, bolometers and to like means of temperature display, management and control and to methods of operating these systems, including visualization of areas of signal emission by display of visible targeting means.

Reference hereinafter to "infrared radiometer" includes "thermal imaging radiometer" and "thermography". An infrared radiometer provides single temperature measurement, whereas an infrared thermal imaging radiometer provides a two dimensional thermographic infrared image of a target (camera), pixel by pixel, and supplies more information over time when linked to video than does a single temperature radiometer. An infrared thermal imaging radiometer captures an infrared image of a target surface as a color display and the color palette embraces a range of temperatures to be measured which is panoramically continuously or seamlessly displayed as a scan in color by a video camera, over time as well as over distance. The device has a variable focus feature, responsive to automatic adjustment of the field of view and measurement of the distance between the target and the sensor. It is a further feature of this invention that three dimensional measurement surface variations in height and depth are detected and displayed with respect to differential temperatures and other radiated signals between relatively elevated and depressed or oblique (convex/concave) regions of the measured surface area, such as curved surfaces, preferably on a pixel by pixel scale, so that areas that are closer or farther from a thermal detector are identified, as a narrow range distance scanner, and their surface temperatures are displayed on a monitor means. Multiple or separate detectors are usefully deployed to produce video or thermal images of a measurement surface from different angles, so that when played back together a stereoscopic image of the surface is produced in three dimensions of height, width and depth. These images are selectably visual or thermal. The system is selectably operated either in a two dimensional panoramic capture and display mode, or the system is operated as three dimensional visualization means.

A video system for remote imaging of variable parameters, such as temperature, humidity, emissivity, high and low alarm conditions, date and time, GPS location, barometric pressure, and contact target temperature and distance from a detector to the target surface over real time from a measurement surface, comprises the combination of a detector means for capture and measurement of radiation signals from the surface together with sighting and display means for aiming the detector at a light display visualized area of surface measurement together with a video image management means linked to the detector and to sighting means to produce and to record a continuous panoramic video digital image of a remote measurement surface, from which radiation signals arise and is linked with a display means, for examination of the image of the emitted surface radiation together with visible features of the measurement surface. The parameter values are also displayed upon a video image display of the target and/or upon a display means, such as a CRT tube or digital screen monitor. Video and thermal images and data are not only displayed and managed, but the information is stored in remote storage means or transmitted for further treatment by either wired or wireless connection to remote stations. Storage is in a hard drive, SD card, USB drive, memory stick or similar storage center. The system plays back infrared video events on display means or downloads to a PC or to a microprocessor unit. The video event and the infrared display are recorded either simultaneously, sequentially or superimposed upon one another. Video features which are captured by the system are separable into discreet displays for management and for analysis. The imaging system of the invention is also operated in tomographic mode for either visual or thermal information display, wherein a three dimensional video image is developed from serial cross sectional views of a target, as a pattern of computer generated transverse slices, which allow localization of thermal anomalies within the target product. Multiple detectors are used together to achieve three dimensional display.

The method of the invention comprises the steps of detecting electromagnetic radiation arising from a remote surface, without contacting the surface, and producing measurement values from said radiation; visualizing the source area of radiation signals by illumination of said surface with a pattern of visible light from one or from separate sources to form a video target sighting/aiming display; and capturing a video image of visible and infrared radiation, including said light display pattern, from the measurement surface in a video device; and displaying both visible and infrared images of said surface together with measurements taken from said surface. Captured images of both visual and thermal content are thereafter recorded for future display from an archive of scans.

The video means is preferably linked to the detector and to the display by wireless connection which may be, for example, optical or radio frequency.

The measured values are verbalized and broadcast as a spoken report by the system.

### EXAMPLE

A preferred best mode embodiment of a basic system comprises an infrared radiometer or thermal imaging device or camera linked with a digital video camera. Linkage is selectably digital or analogue; and when linkage is wireless, it comprises any or all of radio, ultrasonic or optical transmissions. A video camera operates either independently or selectably under control from the radiometer, and the radiometer is also selectably controlled from the camera. Camera and/or radiometer are preferably separated stand-alone units, which are linked by wire or wireless, but are also alternatively selectively mounted together as a common hand held battery powered unit. When the radiometer is linked to the video camera, temperature data, for example, is sent to the camera for display together with a visible image of the surface from which infrared radiant temperature is detected. The video feature provides continuous panoramic views of the surface from which temperature is detected over both real time and along distance and includes both a visible and an infrared thermal display. Such performance and display is not possible with a snapshot camera of any kind. Video scanning provides a dynamic as well as static assessment of target properties over time as target conditions change and allows comparison of visible and also invisible changes with respect to one another both at the surface and also within the object or target under scrutiny.

The video display preferably includes a running record of time of day and date together with temperature being measured on a remote surface and also ambient temperature. The video record is continuously annotated by features beyond only infrared temperature and additionally includes emissivity, alarms, distance, time, date, minimum and/or maximum temperatures, as well as sound features from a microphone or other sound source, such as a recording on a chip, disc or tape. The sound source is also connected into the system network by wireless and output of any feature of the system is captured via a PC or the like to feed E-mail signals for remote access. Sound recording is broadcast together with visible displays. The video camera sends the file digitally to a local PC, such as via USB interface or to a networked PC via Ethernet or internet, or connects via E-mail through a server and may respond to a pre-set alarm condition. Other features of the invention include: 1) ability to record, not only normal visible images, but also the ability to record and make a movie of a thermal image visualized by the system; 2) ability to measure, to record, to present on a display and to include in a permanent record conditions of humidity, barometric pressure, temperature, light level, emissivity, distance and memory card storage status; 3) ability of the display to show the field of view electronically with graphics on the display which automatically changes and updates in relation to target distance and position; 4) ability of the device to provide both a visible and an infrared light source so that recording is possible in dimly lit areas; 5) ability of the system to present, display and record GPS location data, including altitude, latitude and longitude; 6) ability of the system to rotate inverted or skewed images and to display target images in an upright posture with respect to gravity, regardless of the device posture; 7) ability of the system to play back previously recorded measurements, images, videos from an onboard memory or an inserted memory card; 8) ability of the system to refocus and to change the optical field of view manually or automatically in response to change of position or of distance between a detector and a target object; 9) ability of the system to use print drivers so as to interface directly with standard PC printers.

The video camera is connected to another electronic measurement device for such parameters as temperature, humidity, pressure, volume, flow rate, or stress or distance or displacement and receives data from that device by digital, analogue or wireless means and annotates the video image with such data while recording image and sound in real time.

Prior art includes light display targeted infrared radiometers with and without snapshot camera features, as in U.S. Patent No. 7,093,974 of KIENITZ issued August 22, 2006.

Since the measured temperature indicates heat released from a measured surface as invisible infrared radiation, it is known to make the measurement area visible by display thereupon of a light sighting/aiming pattern against the measurement surface from laser or visible light sources coupled to the radiometer optics, and the display is then also captured by the video camera, as the radiometer operates to visualize the outline of the surface area of temperature investigated. The identification sighting light arises from visible sources, such as lasers or halogen lamps, and may comprise a single laser from which beams are divided by diffraction or splitters; or for eye safety at long working distances, separate light sources may be used to attain greater display brightness.

The video "visible" display may be juxtaposed to the "thermal" image, either above, below or side by side, to produce comparative serial images displayed together of the thermal and visible features. Continuous video capture of a thermal display shows changing heat flux against a visible target surface structure background over time. A snapshot camera does not provide this display continuity. The thermal image video may be displayed alternately, over time, vis a vis the non-thermal visible image video so that a continuous or sequential alternating panorama is on view in the same display system. These features are useful to indicate impending product failures, such as development of "heat cracks" or other signs of thermal stress in a product.

### DRAWING

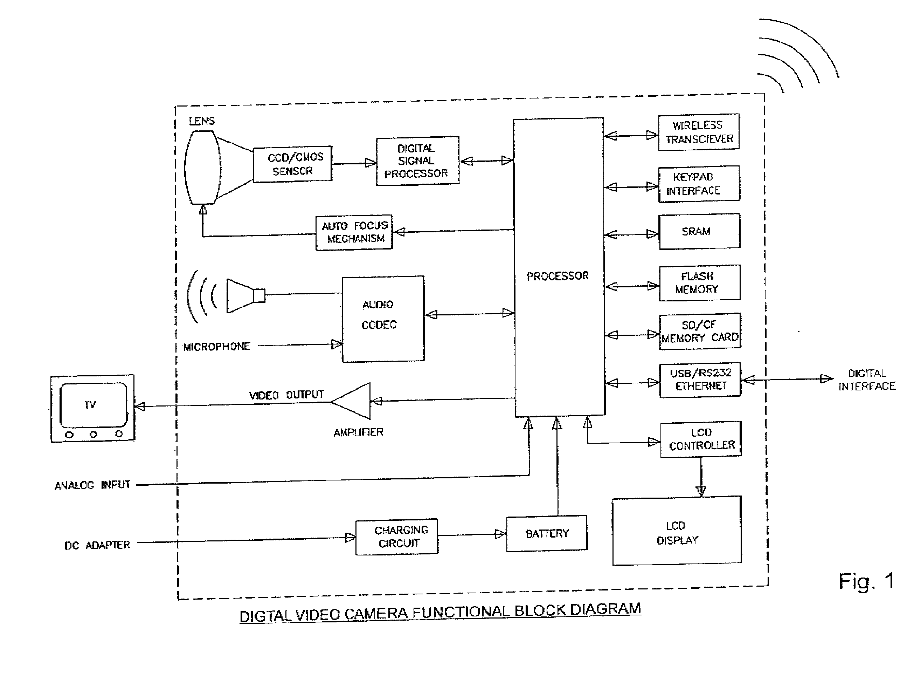

FIG. 1 is a functional block diagram of a video camera used in this invention. The camera includes inputs for sound as well as analogue/digital wireless input and has output connections for TV or video replay, recording, or connection to E-mail.

FIG. 2 illustrates a handheld infrared radiometer unit for investigation of surface temperature at a distance. The radiometer links to a video camera by digital interface (RS 232, USB, and radio broadcast, as via a router system).

The video camera captures the output of a radiometer and the system displays time, date, surface temperature, emissivity, alarm set points and ambient temperature together with the image of the area of surface investigation. The display also may show, for example, either a laser or other visible light projection aiming pattern of the outline of the target and/or a center point to identify the source of measurement. A microcomputer feature of the system provides graphic calculation and displays of measured changes over real time and stores all collected data in accessible memory. The visible aiming pattern is linked to an operator controlled cursor display.

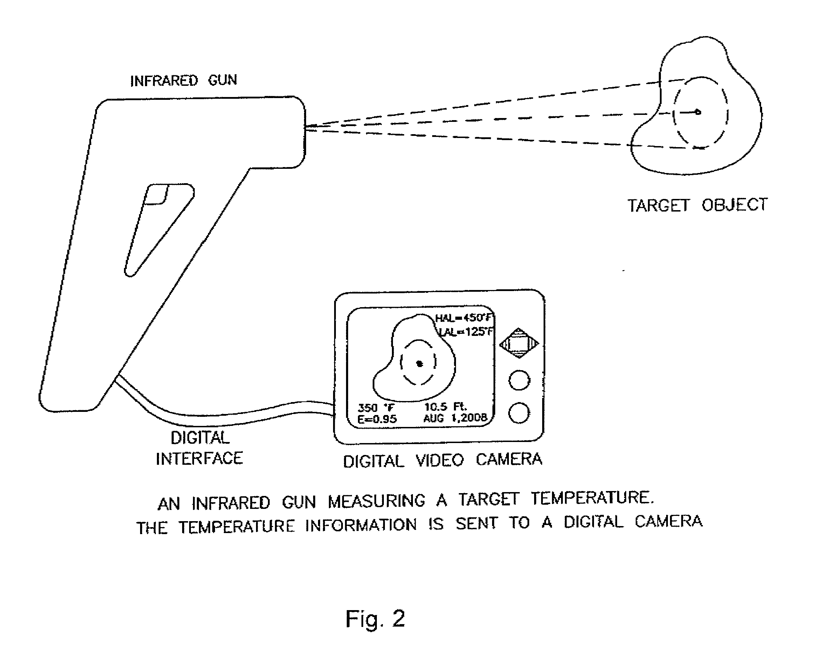

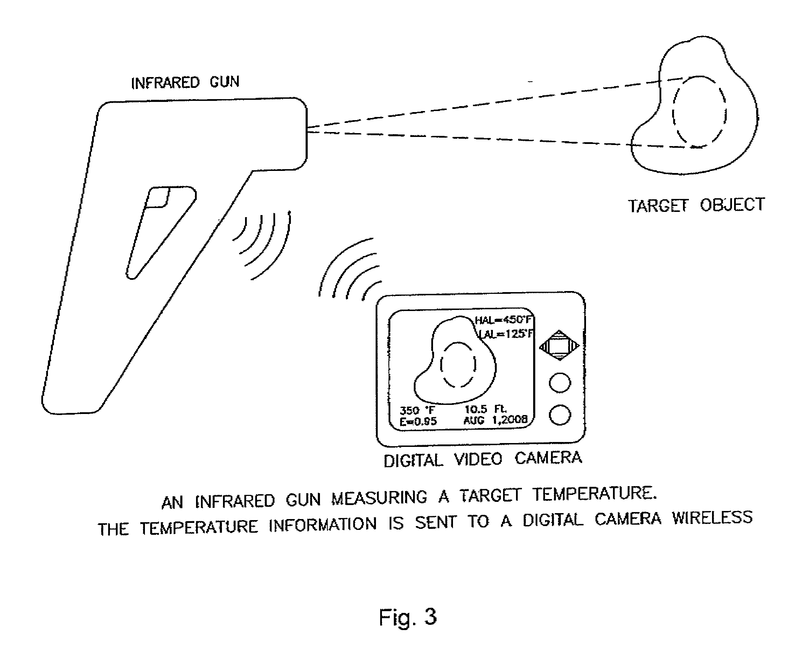

FIG. 3 shows wireless linkage of the camera of FIG. 2 with the radiometer.

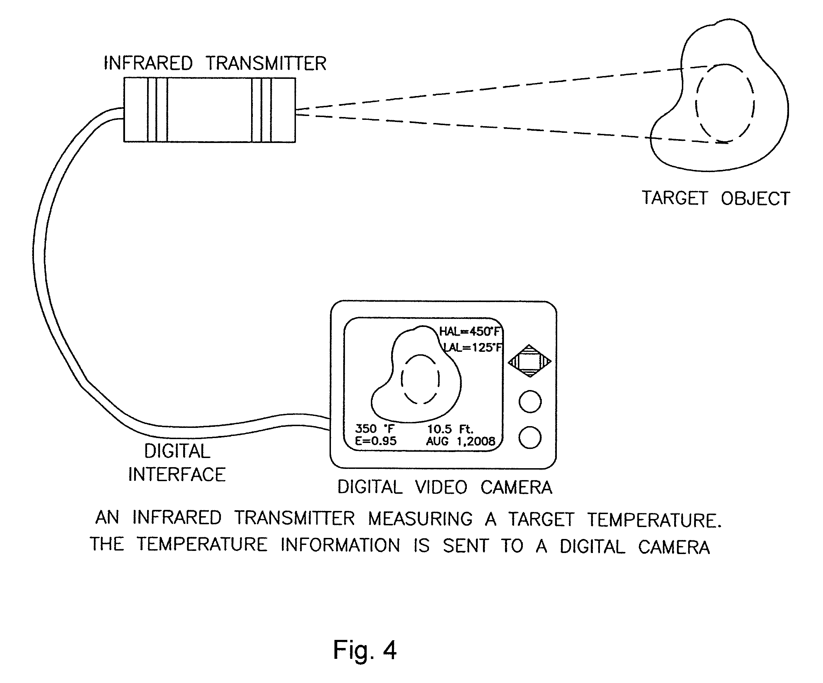

FIG. 4 is a fixed mounted version of the radiometer and camera.

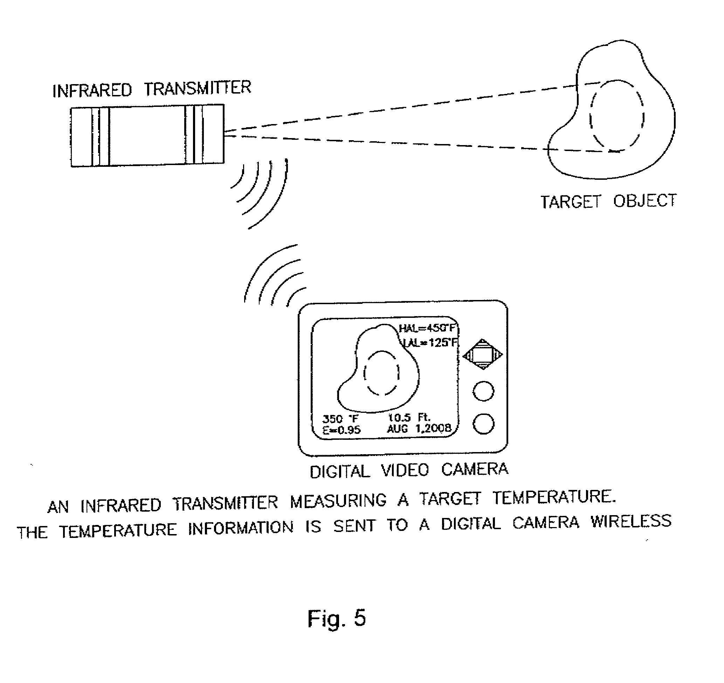

FIG. 5 shows wireless linkage of the camera and fixed mounted infrared transmitter.

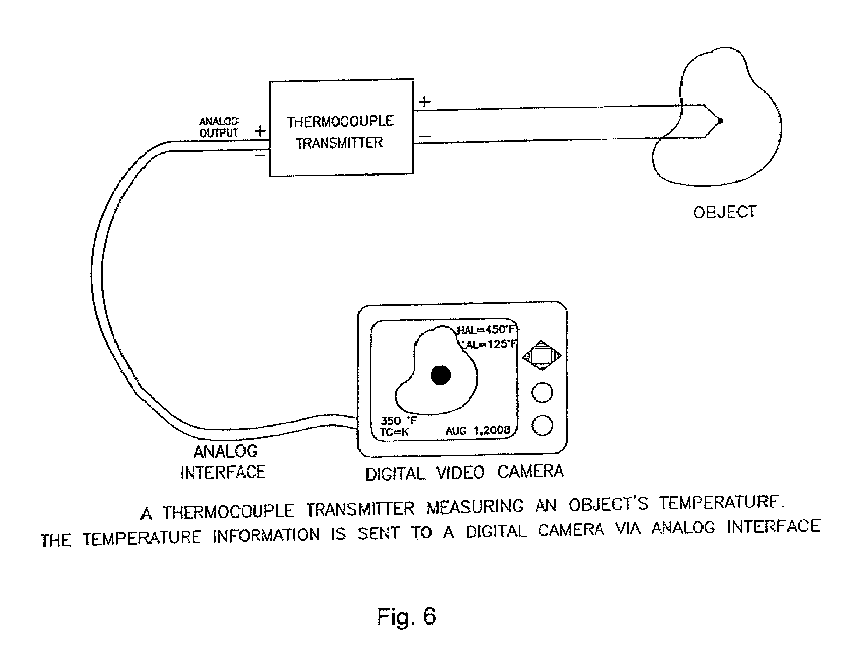

FIG. 6 shows analogue output from a thermocouple transmitter and linkage to analogue input of a video camera.

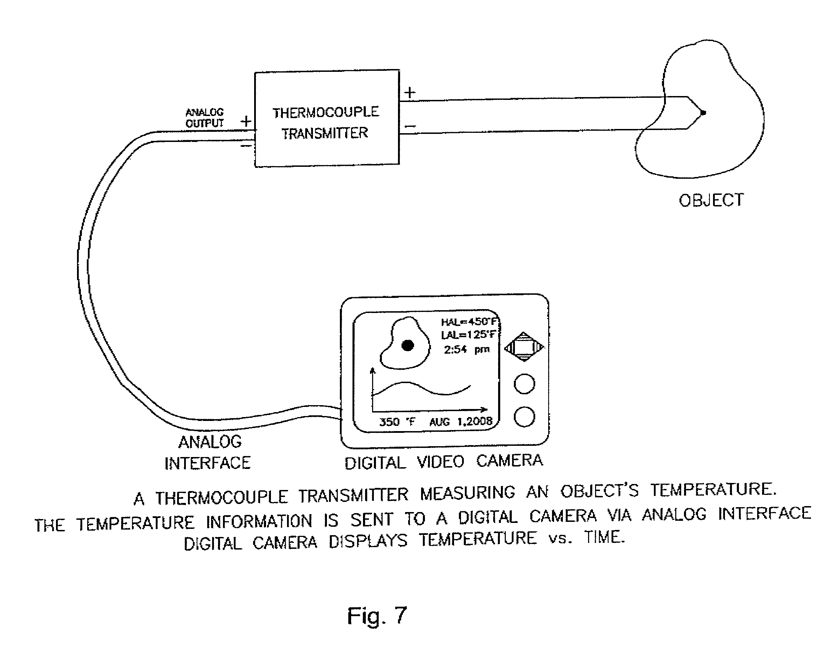

FIG. 7 shows a video camera, which displays a plot of temperature in real time.

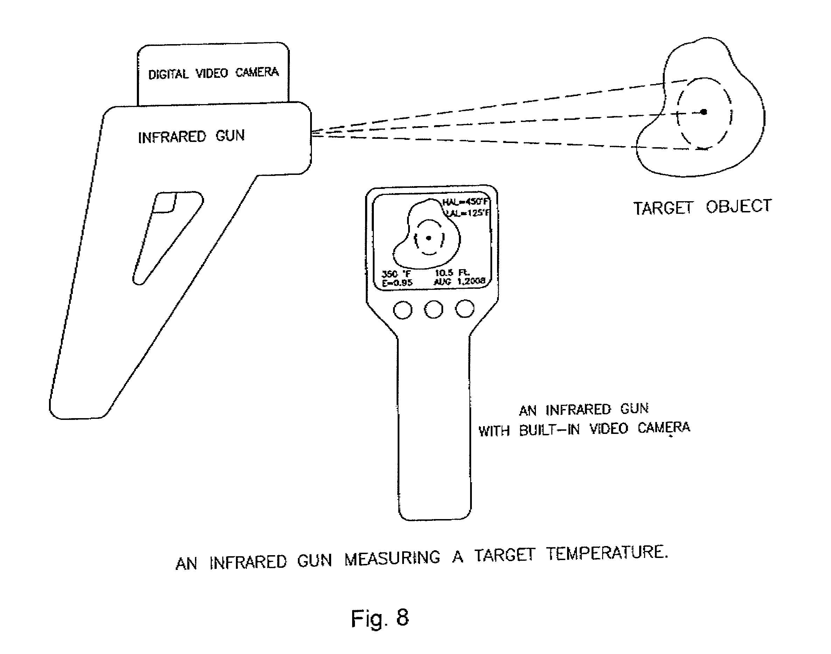

FIG. 8 shows a video camera, which is selectably either integral with a radiometer device or detachable there from to operate as a stand-alone unit.

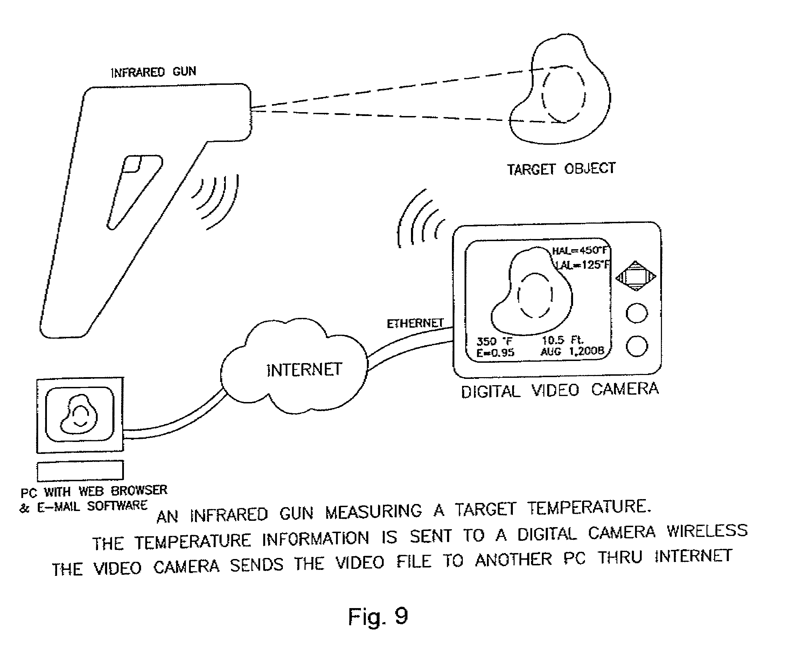

FIG. 9 is similar to FIG. 3 except that the camera sends the video file to a PC via internet or E-mail according to operational conditions selected by the operator.

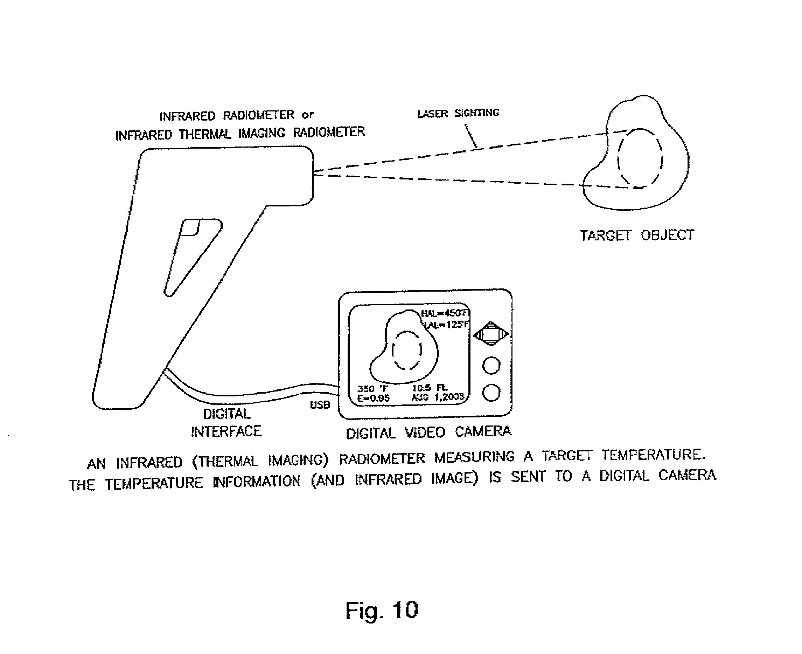

FIG. 10 is an infrared (thermal imaging) radiometer measuring a target surface temperature. The temperature measurement or infrared image is sent to a digital camera.

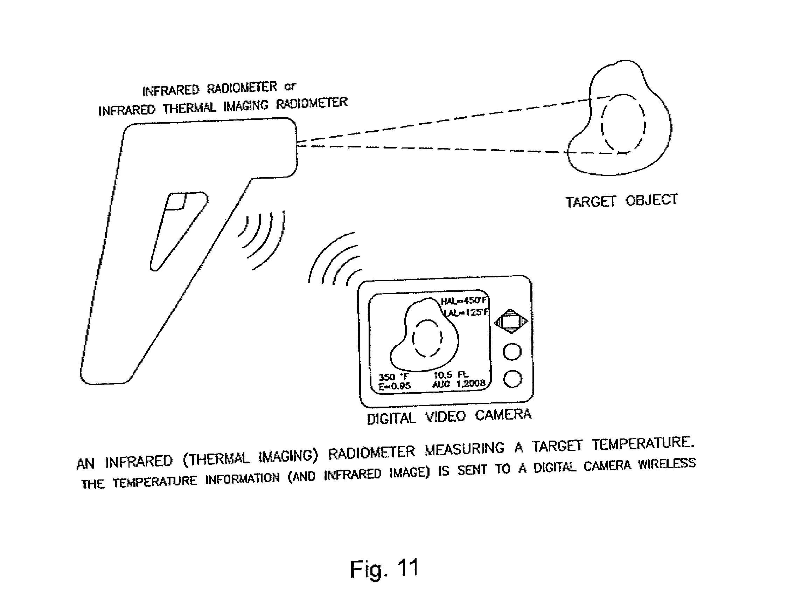

FIG. 11 shows wireless transmission of detected thermal information sent from the image detector.

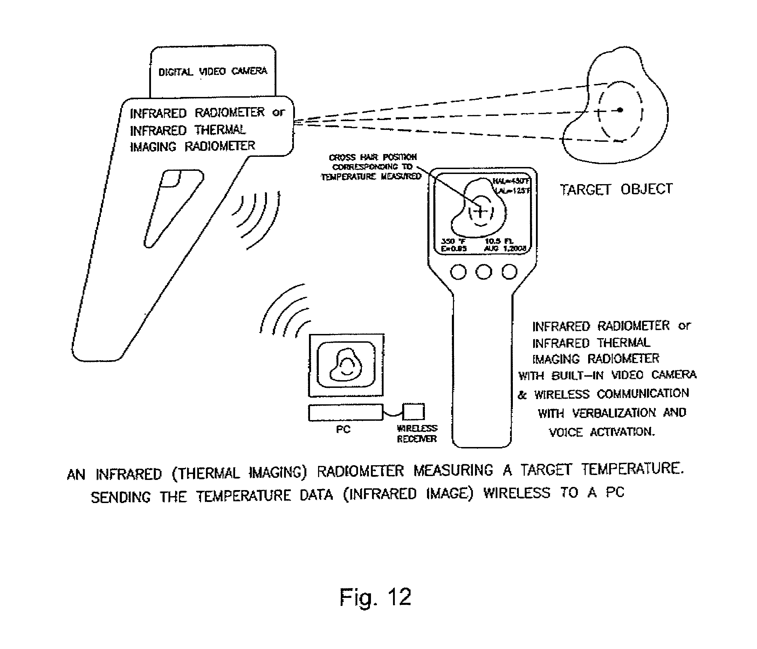

FIG. 12 shows a thermal imaging detector with a built in display and video camera. It includes wireless image transmission and verbalization of measured values as well as visual display.

Because an infrared thermal imaging radiometer system with a visible camera system has visible as well as infrared thermal video capacity it is possible to display continuously, sequentially and/or even simultaneously both visible and infrared thermal images, for example, either alternately or one above the other or side by side (serially juxtaposed), as well as superposed one on the other, to maximize image view size on a display means sequentially whilst correlating and comparing visible and thermal features of the surface.

A thermal imaging radiometer captures a display of differential color images to show surface thermal disparity and so produces a thermal color map to correlate with a corresponding visible view. A movable cursor under control of the system operator highlights or expands or modifies features of special interest for closer examination or management of temperature, even pixel by pixel.

A method of the invention includes the sequential steps of (a) detecting remote surface temperature signals from a surface producing invisible infrared radiation and (b) visualizing the infrared area of investigation by a sighting display on the measured surface of illumination and (c) capturing the sighting visible display on a video camera for visible display together with the measured temperature signals from an infrared radiometer and/or other test device linked to the video camera and the video record is then recorded and/or sent onward, via E-mail, for example. Thus both infrared displays such as temperature and also visible views of the measurement surface are captured and displayed by the system in a method of dual infrared and visible light investigation.

## Claims

1. Video system for imaging and for scanning a remote measurement surface comprising the combination of detector means for capture and measurement of invisible signals from said surface; sighting and display means for aiming said detector means to a particular aiming light display visualized area of measurement on said surface, video image management means linked to said detector and also to sighting means to produce a continuous panoramic video digital image or scan of a remote measurement surface from which invisible signals arise; and display means for comparative examination of a video identified image of emitted invisible signals together with video visible features of said measurement surface.

2. Method of non-contact measurement, scanning and display of invisible signals arising from a remote measurement surface comprising the steps of detecting invisible signals arising from a remote surface without contacting said surface and producing measurement values of said signals; visualizing the source area of invisible signals by illumination of said surface with a pattern of visible light to form a video target sighting display, capturing a video image of visible and invisible radiation from the measurement surface in a video device; and displaying both visible and invisible images of said surface together with measurements taken from said surface.

3. A system of claim 1 in which the video is linked to the detector and to the display by wireless connection.

4. A system of claim 1 which includes means to verbalize and to broadcast a spoken report of measured values.

5. A method of claim 2 which includes the step of broadcasting spoken results of measurement.

6. A method of claim 2 which includes the step of connecting the video with a detector and with a display by wireless means.
